# EUROPÄISCHE PATENTANMELDUNG

(11) **EP 2 995 187 A1**
(43) Veröffentlichungstag der Anmeldung: **16.03.2016**
(21) Anmeldenummer: 15172255.0
(22) Anmeldetag: 16.06.2015
(51) Int. Cl.: A01D 41/127, B60K 35/00

(54) **LANDWIRTSCHAFTLICHES FAHRZEUG UND ANZEIGEINSTRUMENT DAFÜR**

(30) Priorität: 12.09.2014 DE 102014013257
(71) Anmelder: CLAAS Selbstfahrende Erntemaschinen GmbH, 33428 Harsewinkel (DE)
(72) Erfinder: Volbracht, Andreas, 59302 Oelde (DE)

(57) **Zusammenfassung**

Ein Anzeigeinstrument zum Anzeigen mehrerer Betriebsgrößen für ein landwirtschaftliches Fahrzeug hat eine Anzeigefläche, die in eine erste (15) und eine zweite Teilfläche (16) unterteilt ist, einen ersten Treiber (30) zum Umsetzen von zugeführten Werten einer ersten Mehrzahl anzuzeigender Betriebsgrößen in eine auf der ersten Teilfläche (15) angezeigte Grafik und einen zweiten Treiber (31), der Werte einer zweiten Mehrzahl der Betriebsgrößen empfängt und eine daraus erzeugte Grafik auf der zweiten Teilfläche (16) anzeigt.

## Beschreibung

Die vorliegende Erfindung betrifft ein Anzeigeinstrument und ein mit dem Anzeigeinstrument ausgestattetes landwirtschaftliches Fahrzeug.

Aus DE 10 2011 120 749 A1 ist ein landwirtschaftliches Fahrzeug mit einem Anzeigeinstrument bekannt, auf dessen Anzeigefläche eine Vielzahl von Betriebsgrößen des Fahrzeugs wie etwa Geschwindigkeit, Motordrehzahl, die Füllstände verschiedener Tanks etc. angezeigt werden. Einige dieser Betriebsgrößen sind spezifisch für den in DE 10 2011 120 749 A1 gezeigten Mähdrescher, an anderen Typen von landwirtschaftlichen Fahrzeugen sind sie bedeutungslos. Das Anzeigeinstrument ist daher nur in einem Mähdrescher sinnvoll einsetzbar, bei anderen Typen von landwirtschaftlichen Fahrzeugen wie etwa einem Traktor, einem Feldhäcksler, einer Ballenpresse oder dergleichen werden andere Typen von Anzeigeinstrument benötigt.

Einige der auf dem Instrument angezeigten Betriebsparameter sind für die sichere Fortbewegung des Fahrzeugs im Straßenverkehr von Bedeutung; in vielen Ländern existieren gesetzliche Vorschriften, die das Vorhandensein eines Anzeigeinstruments für bestimmte Betriebsgrößen verlangen, damit das Fahrzeug für den öffentlichen Straßenverkehr zugelassen werden kann.

Moderne Anzeigeinstrumente verwenden vielfach keine festen Skalen und entlang der Skalen bewegliche Zeiger mehr, sondern haben einen Bildschirm, auf denen frei programmierbare Grafiken darstellbar sind. Dies ist wirtschaftlich, da zum einen ein gleiches Modell von Bildschirm in Anzeigeinstrumenten für unterschiedliche Betriebsgrößen eingesetzt und dafür in großen Mengen preiswert beschafft werden kann, zum anderen ist es, anders als bei einem Zeigerinstrument, kurzfristig möglich, die die angezeigte Grafik umzuprogrammieren, um eine andere Auswahl von Betriebsgrößen anzuzeigen, zum Beispiel um einer technischen Weiterentwicklung des Fahrzeugs Rechnung zu tragen oder um, je nachdem welches von mehreren austauschbaren Werkzeugen am Fahrzeug montiert ist, für das betreffende Werkzeug relevante Betriebsparameter anzuzeigen. Ein Nachteil eines solchen, viele Betriebsgrößen gleichzeitig anzeigenden Instruments liegt jedoch darin, da jedes Mal, wenn eine Änderung an seiner Arbeitsweise vorgenommen wird, von neuem verifiziert werden muss, dass die gesetzlich vorgeschriebenen bzw. sicherheitsrelevanten Betriebsgrößen jederzeit korrekt angezeigt werden.

Aufgabe der Erfindung ist, ein Anzeigeinstrument zum Anzeigen mehrerer Betriebsgrößen für ein landwirtschaftliches Fahrzeug zu schaffen, bei dem der Verifikationsaufwand im Falle einer Änderung der Arbeitsweise vermindert ist bzw. das mit geringem Aufwand an unterschiedliche Typen von Fahrzeugen und deren Betriebsgrößen anpassbar ist.

Die Aufgabe wird gelöst, indem bei einem Anzeigeinstrument mit einer Anzeigefläche und einem Treiber zum Umsetzen von zugeführten Werten anzuzeigender Betriebsgrößen in eine auf der Anzeigefläche angezeigte Grafik die Anzeigefläche in eine erste und eine zweite Teilfläche unterteilt ist, dass der Treiber Werte einer ersten Mehrzahl der Betriebsgrößen empfängt und eine daraus erzeugte Grafik auf der ersten Teilfläche anzeigt, und dass ein zweiter Treiber Werte einer zweiten Mehrzahl der Betriebsgrößen empfängt und eine daraus erzeugte Grafik auf der zweiten Teilfläche anzeigt.

Änderungen, die an den anzuzeigenden Betriebsgrößen der ersten Gruppe vorgenommen werden, haben keinerlei Einfluss auf die Arbeit des zweiten Treibers, und umgekehrt.

Wenn folglich die erste Gruppe Betriebsgrößen umfasst, für die die Existenz eines Anzeigeinstruments Voraussetzung für die Straßenverkehrszulassung des landwirtschaftlichen Fahrzeugs ist, die zweite Gruppe aber keine solchen Betriebsgrößen enthält, dann können an den Betriebsgrößen der zweiten Gruppe nach Belieben Änderungen vorgenommen werden, ohne dass sich dies auf den ersten Treiber auswirken kann. Die Notwendigkeit, bei jeder Änderung der anzuzeigenden Betriebsgrößen die korrekte Funktion des ersten Treibers zu verifizieren, entfällt daher, wenn die Änderungen sich auf die zweite Gruppe beschränken.

Entsprechende Vorteile werden erreicht, wenn die erste Gruppe Betriebsgrößen umfasst, für die die Einhaltung eines vorgegebenen Wertebereichs relevant für die Sicherheit des landwirtschaftlichen Fahrzeugs ist, während die zweite Gruppe von solchen Betriebsgrößen frei ist. In den meisten Fällen gehören solche sicherheitsrelevanten Betriebsgrößen auch zu den Größen, deren Anzeige gesetzlich vorgeschrieben ist.

Als ein weiteres Kriterium für die Zuordnung einer Betriebsgröße zur ersten oder zur zweiten Gruppe kann ein Bezug der Betriebsgröße zum Antrieb bzw. zur Fortbewegung des Fahrzeugs dienen. Derartige Betriebsgrößen wie etwa Motordrehzahl, Fahrgeschwindigkeit, in einem Getriebe des Fahrzeugs eingelegter Gang, Ölstand, Öldruck, Kühlwasserstand, Kühlwassertemperatur sind für beliebige Typen von landwirtschaftlichen Fahrzeugen relevant, weswegen der erste Treiber und die von ihm angesteuerte erste Teilfläche in landwirtschaftlichen Fahrzeugen unterschiedlicher Typen identisch zum Einsatz kommen können.

Betriebsgrößen, die auf ein (im Allgemeinen für den Typ des Fahrzeugs spezifisches oder an ein und demselben Fahrzeug austauschbares) Arbeitsgerät bezogen sind, sollten hingegen sämtlich der zweiten Gruppe zugeordnet sein.

Die zwei Teilflächen können zusammenhängen, müssen es aber nicht. Um eine gegenseitige Beeinflussung des Betriebs von erstem und zweitem Treiber bestmöglich auszuschließen, sind die erste und die zweite Anzeigefläche vorzugsweise jeweils durch einen ersten und einen zweiten Bildschirm gebildet.

Wenigstens eine der Anzeigeflächen kann in einer A-Säule einer Fahrerkabine des Fahrzeugs angeordnet sein, so dass auf ein Armaturenbrett, das den Blick des Fahrers auf ein vorn im Fahrzeug montiertes Arbeitswerkzeug behindert, weitgehend oder vollständig verzichtet werden kann.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht eines Mähdreschers als Beispiel eines erfindungsgemäßen landwirtschaftlichen Fahrzeugs;
- Fig. 2: eine Innenansicht der Fahrerkabine des Mähdreschers aus Fig. 1; und
- Fig. 3: ein Blockdiagramm eines elektronischen Steuer- und Anzeigesystems des Mähdreschers.

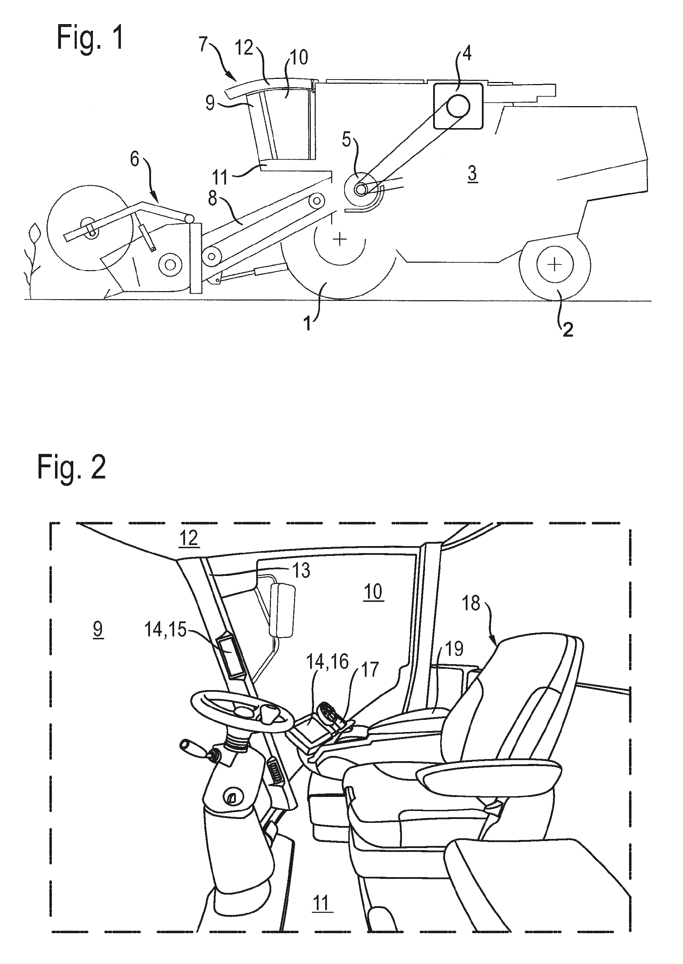

Der in Fig. 1 gezeigte Mähdrescher hat in an sich bekannter Weise ein Fahrgestell mit vorderen Rädern 1 und lenkbaren hinteren Rädern 2 sowie eine auf dem Fahrgestell montierte Karosserie 3, in der ein Verbrennungsmotor 4, üblicherweise ein Dieselmotor, eine Dreschtrommel 5 und diverse Aggregate zur Weiterverarbeitung von aus der Dreschtrommel ausgeschiedenem Erntegut untergebracht sind. Der Verbrennungsmotor 4 treibt über nicht dargestellte Kupplungen und Getriebe die Räder 1 und 2, die Dreschtrommel 5 und die Weiterverarbeitungsaggregate an.

Ein Erntevorsatz 6 ist austauschbar an einem höhenverstellbaren Schrägförderer 8 montiert, der von dem Erntevorsatz 6 eingesammeltes Erntegut der Dreschtrommel 5 zuführt.

Eine Fahrerkabine 7 ist über dem Schrägförderer 8 angeordnet. Eine Frontscheibe 9 erstreckt sich über praktisch die gesamte Höhe der Fahrerkabine 7 hinweg, von einer Bodenplatte 11 bis zu einem Dach 12. Auch Türen 10 der Fahrerkabine 7 sind auf ihrer gesamten Höhe, von der Bodenplatte 11 bis zum Dach 12 verglast, um dem Fahrer einen allenfalls durch A-Säulen 13 zwischen der Frontscheibe 9 und den Türen 10 eingeschränkten Blick ins Freie, über den gesamten Erntevorsatz 6 und die vor dem Mähdrescher liegende Bodenfläche, zu bieten.

Fig. 2 zeigt eine Innenansicht der Fahrerkabine 7. Zu sehen ist ein Teil der Frontscheibe 9, eine Tür 10 und die sich zwischen ihnen erstreckende A-Säule 13. In die A-Säule 13 ist eine erste Teilfläche 15 eines Kombinations-Anzeigeinstruments 14 eingelassen. Eine zweite Teilfläche 16 des Anzeigeinstruments kann weitgehend beliebig in der Fahrerkabine 7 platziert sein; im hier gezeigten Fall ist sie zusammen mit einem Multifunktionsgriff 17 in Verlängerung einer Armlehne 19 eines Fahrersitzes 18 angeordnet.

Die Teilfläche 15 ist vorgesehen, um Werte von Betriebsparametern anzuzeigen, für die dies zulassungsrechtlich vorgeschrieben ist und/oder die mit der Fortbewegung des Mähdreschers zusammenhängen und daher nicht für diesen spezifisch sind, sondern bei anderen Typen von landwirtschaftlichen Fahrzeugen in gleicher Weise anzuzeigen sind, wie etwa Fahrgeschwindigkeit, Motordrehzahl, Füllstand eines Kraftstofftanks, Kühlwassertemperatur, Kühlwasserstand, Öltemperatur, Ölstand oder dergleichen.

Die Teilfläche 16 hingegen ist der Anzeige von Betriebsparametern vorbehalten, deren Anzeige nicht durch zulassungsrechtliche Bestimmungen vorgeschrieben ist und/oder die der Fahrer beim Fahren im Straßenverkehr nicht zu berücksichtigen braucht, da sie sich auf Aggregate beziehen, die im Straßenverkehr nicht zum Einsatz kommen, namentlich über den Multifunktionsgriff 17 zu steuernde Einstellungen des Erntevorsatzes 6, der Dreschtrommel 5 und der weiterverarbeitenden Aggregate.

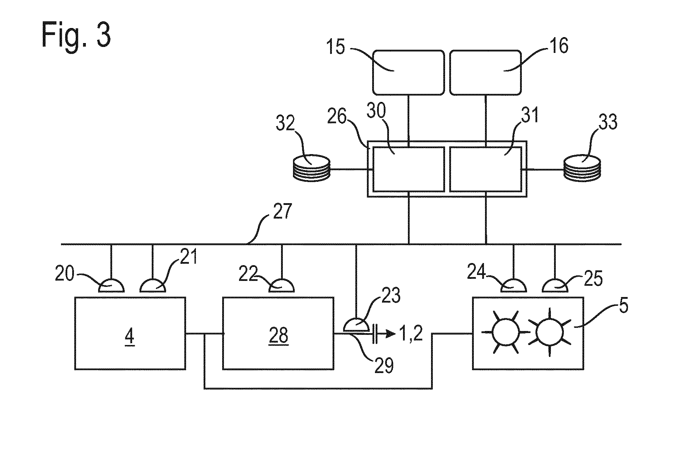

Fig. 3 zeigt schematisch ein Blockdiagramm eines Anzeige- und Steuersystems des Mähdreschers. Sensoren 20 bis 25, die zum Erfassen diverser Betriebsgrößen im Mähdrescher 1 verteilt sind, kommunizieren mit einem Bordcomputer 26 über einen Bus 27. Zu diesen Sensoren können beispielsweise ein Drehzahlsensor 20 und ein oder mehrere Temperatursensoren 21 am Verbrennungsmotor 4, ein Sensor 22 zum Erfassen des eingelegten Gangs an einem von dem Verbrennungsmotor 4 angetriebenen Schaltgetriebe 28 oder ein an einer zu den Rädern 1, 2 führenden Abtriebswelle 29 angeordneter Tachometersensor 23 gehören. Weitere Sensoren 24, 25 sind vorgesehen, um an der Dreschtrommel 5 oder den weiterverarbeitenden Aggregaten Parameter wie etwa die Breite eines Dreschspalts, Drehzahl der Dreschtrommel, Drehzahl eines Reinigungsgebläses oder dergleichen zu erfassen.

Der Bordcomputer 26 unterstützt die gleichzeitige oder zeitlich verschränkte Ausführung mehrerer Treiber 30, 31, sei es, indem Verarbeitungskapazität eines gleichen Prozessors im Zeitmultiplex an die mehreren Treiber 30, 31 verteilt wird, oder indem die Treiber 30, 31 verschiedenen Prozessoren des Bordcomputers 26 zur Ausführung zugewiesen werden. Indem beiden Treibern 30, 31 jeweils unterschiedliche Arbeitsspeicher 32, 33 oder nicht überlappende Bereiche eines gleichen Arbeitsspeichers zugewiesen sind, ist eine gegenseitige Beeinflussung der Treiber 30, 31 durch Austausch von Daten ausgeschlossen. Der Treiber 30 empfängt Betriebsparameterwerte von den Sensoren 20 bis 23 und erzeugt aus diesen ein Anzeigebild, das auf der Teilfläche 15 angezeigt wird, der Treiber 31 erzeugt ein Anzeigebild für die Teilfläche 16 aus Betriebsparameterwerten der Sensoren 24, 25. Veränderungen, die am Treiber 31 vorgenommen werden, um diesen zum Beispiel an Änderungen der von ihm überwachten Verarbeitungsaggregate des Mähdreschers anzupassen, können daher keine Auswirkungen auf den Treiber 30 haben, so dass dessen Funktionsfähigkeit bei einer Veränderung am Treiber 31 nicht erneut verifiziert zu werden braucht. Ferner können der Treiber 30 und die von ihm angesteuerte Teilfläche 15 unverändert auf ein anderes landwirtschaftliches Fahrzeug übertragen werden, um dort dieselben Betriebsparameter wie im Mähdrescher der Fig. 1 anzuzeigen. Um für das andere Fahrzeug spezifische, bei dem Mähdrescher nicht vorkommende Betriebsparameter anzuzeigen, wird auch dort ein zweiter Treiber 31 verwendet, der, da er mit dem Treiber 30 nicht wechselwirkt, auch dessen Funktionsfähigkeit nicht beeinträchtigen kann.

### Bezugszeichen

- 1: Rad
- 2: Rad
- 3: Karosserie
- 4: Verbrennungsmotor
- 5: Dreschtrommel
- 6: Erntevorsatz
- 7: Fahrerkabine
- 8: Schrägförderer
- 9: Frontscheibe
- 10: Tür
- 11: Bodenplatte
- 12: Dach
- 13: A-Säule
- 14: Anzeigeinstrument
- 15: Teilfläche
- 16: Teilfläche
- 17: Multifunktionsgriff
- 18: Fahrersitz
- 19: Armlehne
- 20-25: Sensor
- 26: Bordcomputer
- 27: Bus
- 28: Schaltgetriebe
- 29: Abtriebswelle
- 30: Treiber
- 31: Treiber
- 32: Arbeitsspeicher
- 33: Arbeitsspeicher

## Patentansprüche

1. Anzeigeinstrument zum Anzeigen mehrerer Betriebsgrößen für ein landwirtschaftliches Fahrzeug, mit einer Anzeigefläche und einem Treiber (30) zum Umsetzen von zugeführten Werten anzuzeigender Betriebsgrößen in eine auf der Anzeigefläche angezeigte Grafik, **dadurch gekennzeichnet, dass** die Anzeigefläche in eine erste (15) und eine zweite Teilfläche (16) unterteilt ist, dass der Treiber (30) Werte einer ersten Mehrzahl der Betriebsgrößen empfängt und eine daraus erzeugte Grafik auf der ersten Teilfläche (15) anzeigt, und dass ein zweiter Treiber (31) Werte einer zweiten Mehrzahl der Betriebsgrößen empfängt und eine daraus erzeugte Grafik auf der zweiten Teilfläche (16) anzeigt.

2. Anzeigeinstrument nach Anspruch 1, **dadurch gekennzeichnet, dass** die erste Gruppe Betriebsgrößen umfasst, für die die Existenz eines Anzeigeinstruments Voraussetzung für die Straßenverkehrszulassung des landwirtschaftlichen Fahrzeugs ist und die zweite Gruppe von solchen Betriebsgrößen frei ist.

3. Anzeigeinstrument nach Anspruch 1 oder 2, **dadurch gekennzeichnet, dass** die erste Gruppe Betriebsgrößen umfasst, für die die Einhaltung eines vorgegebenen Wertebereichs relevant für die Sicherheit des landwirtschaftlichen Fahrzeugs ist und die zweite Gruppe von solchen Betriebsgrößen frei ist.

4. Anzeigeinstrument nach einem der vorhergehenden Ansprüche, **dadurch gekennzeichnet, dass** die erste Gruppe Betriebsgrößen umfasst, die auf Antrieb und Fortbewegung des Fahrzeugs bezogen sind.

5. Anzeigeinstrument nach einem der vorhergehenden Ansprüche, **dadurch gekennzeichnet, dass** die zweite Gruppe Betriebsgrößen umfasst, die auf ein Arbeitsgerät (5, 6) des Fahrzeugs bezogen sind.

6. Anzeigeinstrument nach einem der vorhergehenden Ansprüche, **dadurch gekennzeichnet, dass** die erste Gruppe wenigstens eine unter Fahrzeuggeschwindigkeit, eingelegtem Gang, Ölstand, Öldruck, Kühlwasserstand, Kühlwassertemperatur ausgewählte Betriebsgröße umfasst.

7. Anzeigeinstrument nach einem der vorhergehenden Ansprüche, **dadurch gekennzeichnet, dass** die erste und die zweite Anzeigefläche (15, 16) jeweils durch einen ersten und einen zweiten Bildschirm gebildet sind.

8. Landwirtschaftliches Fahrzeug mit einem Anzeigeinstrument nach einem der vorhergehenden Ansprüche, **dadurch gekennzeichnet, dass** wenigstens eine der Anzeigeflächen (15) in einer A-Säule (13) einer Fahrerkabine (7) des Fahrzeugs angeordnet ist.
